# EUROPÄISCHE PATENTSCHRIFT

(11) **EP 1 026 650 B1**
(45) Veröffentlichungstag und Bekanntmachung des Hinweises auf die Patenterteilung: **23.03.2005**
(21) Anmeldenummer: 00101387.9
(22) Anmeldetag: 24.01.2000
(51) Int. Cl.: G08G 1/16

(54) **Verfahren und Vorrichtung zur Informations-Übertragung an ein Fahrzeug**
Method and apparatus for information transmission to a vehicle
Méthode et appareil pour la transmission d'information au véhicule

(30) Priorität: 02.02.1999 DE 19904110
(43) Veröffentlichungstag der Anmeldung: 09.08.2000
(73) Patentinhaber: Osram Opto Semiconductors GmbH & Co. OHG, 93049 Regensburg (DE)
(72) Erfinder: Arndt, Karlheinz, 93059 Regensburg (DE)
(74) Vertreter: Epping, Hermann, Fischer

(56) Entgegenhaltungen:
- US-A- 5 204 536

## Beschreibung

Die Erfindung betrifft ein Verfahren und eine Vorrichtung zur Informationsübertragung von einem stationären oder beweglichen Objekt an ein Fahrzeug.

Um auch bei hoher Verkehrsdichte im Straßenverkehr einen möglichst reibungslosen Verkehrsfluß zu gewährleisten und gleichzeitig den Kraftfahrzeuginsassen ein erhöhtes Maß an Verkehrssicherheit zu bieten werden verstärkt technische Systeme zur Verkehrslenkung entwickelt und eingesetzt. Derartige Verkehrsleit- und/oder Verkehrssicherheitssysteme sind zumeist relativ aufwendig und erfordern häufig die Installation von teuren stationären oder fahrzeuggestützten Anlagen.

Die Informationsübertragung von stationären Systemen zu Fahrerinformationssystemen im Fahrzeug und von Fahrzeug zu Fahrzeug stellt einen bedeutenden Faktor in der Verkehrsleit- und -sicherheitstechnik dar.

Die Druckschrift US 5,204,536 beschreibt ein elektrooptisches Monitorsystem zur Beobachtung von Objekten, insbesondere Fahrzeugen, aufweisend eine Vielzahl von optischen Signal-Transmittern, die auf dem zu beobachtenden Objekt (beispielsweise ein Fahrzeug) befestigt sind. Die Identifizierung des zu beobachtenden Objekts erfolgt dabei durch die geometrische Anordnung dieser Signal-Transmitter. Ein optischer Receiver im Fahrzeug empfängt aus der Entfernung das übermittelte optische Signal, wobei ein Prozessor das Objekt aufgrund der geometrischen Anordnung der optischen Transmitter auf dem Objekt und der optischen Signale, die vom Objekt empfangen werden, identifiziert. Der Transmitter kann dabei differentiell codierte Signale oder Signale unterschiedlicher Wellenlänge übermitteln, um die Identifikation des Objekts oder der übermittelten Daten zu ermöglichen.

Der vorliegenden Erfindung liegt die Aufgabe zugrunde, ein Verfahren sowie eine Vorrichtung anzugeben, mit dem bzw. mit der auf einfache und kostengünstige Weise Information zum Fahrzeug und zwischen Fahrzeugen übermittelt werden kann und somit auf einfache und kostengünstige Weise sowohl eine Verkehrslenkung als auch eine Erhöhung der Sicherheit im Straßenverkehr ermöglicht wird.

Diese Aufgabe wird durch ein Verfahren mit den Merkmalen des Patentanspruches 1 und durch eine Vorrichtung mit den Merkmalen des Patentanspruches 7 gelöst.

Vorteilhafte Ausführungsformen und Weiterbildungen des Verfahrens bzw. der Vorrichtung sind Gegenstand der Unteransprüche 2 bis 6 bzw. 8 bis 12.

Seit Kurzem ist es möglich, sehr helleuchtende und zuverlässige lichtemittierende Halbleiterbauelemente, insbesondere Leuchtdioden (LEDs), herzustellen, und es ist bereits vorgeschlagen worden, derartige leuchtstarke LEDs im Straßenverkehr als Signalleuchten von Verkehrsampeln oder als Fahrzeugleuchten einzusetzen.

Die Erfindung macht sich die Eigenschaft derartiger LEDs zunutze, im Pulsbetrieb mit hohen Frequenzen bis in den MHz-Bereich betrieben werden zu können, ohne daß dabei die von einem Betrachter beobachtete Helligkeit der LED merklich abnimmt. Dies ermöglicht es, eine pulsierend betriebene leuchtstarke LED als visuell wahrnehmbare Hinweiseinrichtung (beispielsweise Bremslicht, Blinklicht oder Schlußlicht eines Kraftfahrzeugs oder Signalleuchte einer Verkehrsampel) für den Fahrer eines Fahrzeuges einzusetzten und gleichzeitig in dem Fahrzeug eine Empfangseinrichtung vorzusehen, die das pulsierende Lichtsignal empfängt und durch dessen Auswertung Informationen ermittelt, die über die visuell erfaßbare Hinweisinformation hinausgehen. Diese weiteren Informationen werden dem Fahrer durch ein akustisches und/oder optisches Signal angezeigt und/oder werden als Grundlage für einen Eingriff in den Betriebszustand, z. B. die Fahrgeschwindigkeit, des Fahrzeuges verwendet.

Es sind vielfältige Anwendungs- und Einsatzmöglichkeiten des erfindungsgemäßen Verfahrens möglich. Eine erste bevorzugte Ausführungsform des Verfahrens kennzeichnet sich dadurch, daß das ausgesendete Lichtsignal einer LED eines stationären Objekts oder eines Fahrzeugs ein Pulssignal mit vorbestimmter konstanter Frequenz ist und daß die Auswerteschaltung aus der Frequenzverschiebung des empfangenen Signals gegenüber dem ausgesendeten Signal - d.h. aus der Frequenzabweichung des elektrischen Empfangssignals von der konstanten Frequenz - die Relativgeschwindigkeit zwischen dem Objekt bzw. Fahrzeug und dem empfangenden Fahrzeug ermittelt. Mit dieser auf dem Doppler-Effekt beruhenden Ermittlung von Relativgeschwindigkeiten kann beispielsweise ein gewünschter, geschwindigkeitsangepaßter Abstand zu einem vorausfahrenden Fahrzeug eingehalten werden, das im Rücklicht eine oder mehrere pulsierend betriebene LEDs enthält.

Die Einhaltung des gewünschten Abstands kann einerseits indirekt über eine dem Fahrer mitgeteilte Abstandsanzeige oder ein Hinweissignal bei zu kleinem und/oder zu großem Abstand erfolgen und andererseits besteht die Möglichkeit, eine unmittelbare Abstandsregelung durchzuführen, indem die bei der Auswertung erhaltene Abstandsinformation durch Steuerung des Motor- und/oder Bremssystems direkt den Fahrzustand des Kraftfahrzeugs verändert. Besonders bei der letztgenannten automatischen Abstandsregelung läßt sich im Kolonnenverkehr oder beim Umschalten einer Ampel von rot auf grün in vorteilhafter Weise ein flüssigerer Verkehrsablauf mit einem erhöhten Durchsatz an Kraftfahrzeugen erzielen.

Es ist auch möglich, die Bremsleuchte eines vorausfahrenden Fahrzeugs mit einer oder mehreren LEDs auszustatten und gemäß der ersten Ausführungsform des erfindungsgemäßen Verfahrens bei einer Bremsung mit einem vorbekannten, frequenzstabilen Pulssignal zu betreiben. Die vorstehend beschriebene Abstandsüberwachung erfolgt dann bei jeder Bremsung des vorausfahrenden Fahrzeugs, wobei wiederum eine mittelbare, anzeigengestützte Regelung des Abstands über den Fahrer oder eine automatische Abstandsregelung durch einen direkten Eingriff in die Bremssteuerung vorgesehen sein kann. Die automatische Regelung bietet den Vorteil, daß die Bremskraft selbsttätig so scharf wie nötig aber dennoch so moderat wie möglich eingestellt werden kann. Auf diese Weise kann sowohl ein weicher und frühzeitiger Bremsablauf bewirkt als auch im Gefahrenfall durch frühzeitige Einleitung einer automatischen, scharfen Bremsung ein drohender Auffahrunfall vermieden werden.

Eine zweite vorteilhafte Ausführungsform der vorliegenden Erfindung besteht darin, daß dem ausgesendeten pulsierenden Lichtsignal ein eine Nutzinformation tragendes Nutzsignal aufmoduliert wird, das von der Empfangseinrichtung an die Auswerteschaltung weitergeleitet und dort wieder in die Nutzinformation transformiert wird. Auch bei dieser Ausführungsform bieten sich vielfältige Anwendungsvarianten. Beispielsweise kann die LED wiederum die Bremsleuchte eines vorausfahrenden Fahrzeugs bilden, wobei das aufmodulierte Nutzsignal für die Stärke der Bremsung repräsentativ ist. Dadurch kann im nachfolgenden Fahrzeug nicht nur das Bremsereignis als solches erfaßt sondern auch die Stärke der Bremsung ermittelt werden. Die im Nutzsignal enthaltene Information kann analog dem bereits im Zusammenhang mit der ersten Ausführungsform beschriebenen Verfahren entweder als Hinweissignal dem Fahrer kenntlich gemacht werden oder einen Eingriff in den Fahrzustand des Fahrzeuges bewirken. Beispielsweise kann eine automatische Vollbremsung durchgeführt werden, wenn das empfangene Nutzsignal eine Vollbremsung des vorausfahrenden Fahrzeugs angibt.

Bei einer weiteren bevorzugten Variante der zweiten Ausführungsform ist die LED oder eine Mehrzahl von LEDs als eine Signalleuchte in einer Verkehrsampel oder beispielsweise als Warnleuchte an einem Bahnübergang eingesetzt. Das Nutzsignal kann beispielsweise die Zeit bis zum Ende der Rotphase bzw. der Öffnung des Bahnübergangs repräsentieren. Aufgrund dieser Nutzinformation kann der Fahrer dann entscheiden, ob ein Abstellen des Motors sinnvoll ist. Ebenso ist es möglich, daß der Motor, ausgelöst durch die empfangene Nutzinformation, durch einen direkten Steuereingriff selbstätig abgestellt und zum richtigen Zeitpunkt selbsttätig wieder angestellt wird.

Das Nutzsignal kann ein amplitudemoduliertes oder ein frequenzmoduliertes Signal sein.

Es ist ohne weiteres möglich und auch zweckmäßig, das Verfahren nach der ersten Ausführungsform mit dem Verfahren nach der zweiten Ausführungsform zu kombinieren. Die Nutzinformation kann dann entweder durch eine Amplitudenmodulation des frequenzstabilen Pulssignals diesem hinzugefügt werden oder es ist auch möglich, ein zusätzliches Nutzsignal vorzusehen, das in einem anderen Frequenzbereich als das frequenzstabile Pulssignal liegt und dadurch von diesem unterschieden werden kann.

Um eine hohe Leuchtintensität zu erreichen, können bei allen Anwendungen mehrere, in Array- oder Zeilenform kombinierte LEDs eingesetzt werden.

Der Einsatz des erfindungsgemäßen Verfahrens und der erfindungsgemäßen Vorrichtung ist nicht nur auf den Straßenverkehr beschränkt. Denkbar ist beispielsweise auch der Einsatz im schienengebundenen Verkehr.

Die Erfindung wird nachfolgend anhand der Beschreibung eines Ausführungsbeispiels in Verbindung mit der Zeichnung näher erläutert. In dieser zeigt:
- Fig. 1: eine Prinzipdarstellung einer Sende- und Empfangsanordnung nach der vorliegenden Erfindung, wie sie in zwei aufeinanderfolgenden Kraftfahrzeugen im Straßenverkehr verwendet wird; und
- Fig. 2: ein schematisches Blockschaltbild der in Fig. 1 dargestellten Anordnung.

Ein vorausfahrendes Fahrzeug 1 weist zwei Bremsleuchten auf, die jeweils durch ein Array hellleuchtender roter LEDs 2 realisiert sind, welche bei einer Bremsung im Pulsbetrieb bei fester Frequenz betrieben werden.

Ein nachfolgendes Fahrzeug 3 ist an seinem Frontbereich mit einer Empfangseinrichtung 4 ausgestattet, die das von den Bremsleuchten-LEDs 2 ausgesandte Lichtsignal 13 empfängt und in ein elektrisches Empfangssignal ensprechender Signalamplitude umwandelt. Die optische Empfangseinrichtung 4 ist aus einer Detektordiode mit einer lichteintrittsseitig vorgeschalteten Optik ausgebildet. Genauso wie das vorausfahrende Fahrzeug 1 weist auch das nachfolgende Fahrzeug 3 aus LEDs 2 gebildete Bremsleuchten auf.

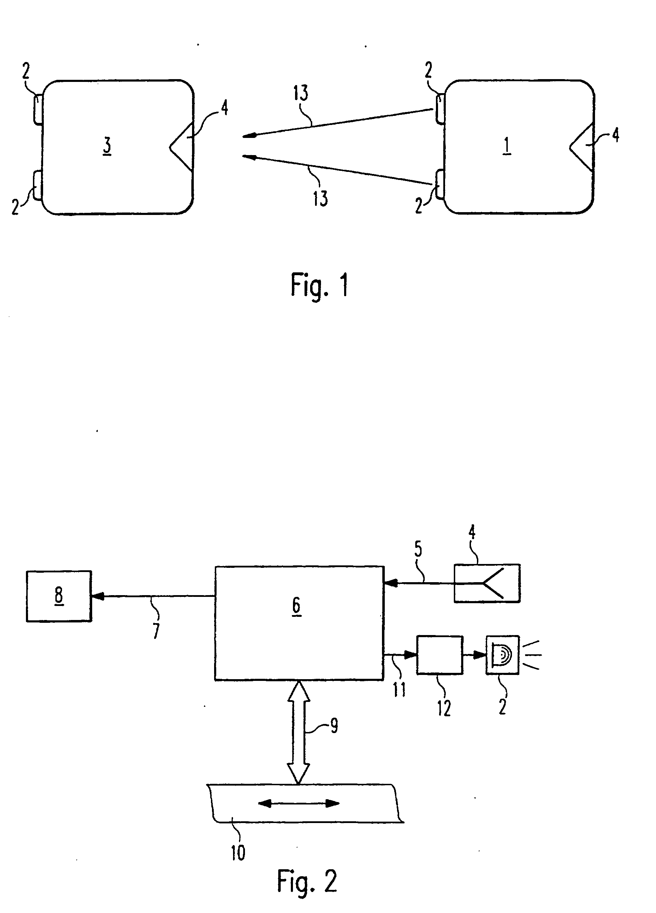

Fig. 2 zeigt ein Blockschaltbild der in dem nachfolgenden Fahrzeug 3 eingesetzten Sende- und Empfangsanordnung. Das von der optischen Empfangseinrichtung 4 ausgegebene elektrische Empfangssignal 5 wird einem Mikrocontroller 6 zugeführt. Der Mikrocontroller 6 ermittelt zunächst, ob ein Empfangssignal 5 vorliegt, und stellt, wenn dies der Fall ist, die Frequenz des Empfangssignals 5 fest. Danach berechnet der Mikrocontroller 6 die Differenz zwischen der festgestellten Frequenz des elektrischen Empfangssignals 5 und einer Referenzfrequenz, die in einem Speicher des Mikrocontrollers 6 abgelegt ist und die identisch mit der festen Pulsfrequenz ist, mit der die LEDs 2 in dem vorausfahrenden Fahrzeug 1 betrieben werden. Aus dem erhaltenen Differenzwert berechnet der Mikrocontroller 6 die Relativgeschwindigkeit zwischen dem vorausfahrenden Fahrzeug 1 und dem hier betrachteten Fahrzeug 3. Dieser Prozeß wird fortlaufend wiederholt, so daß zu jedem Zeitpunkt ein aktueller Wert für die Relativgeschwindigkeit vorliegt.

Stellt der Mikrocontroller 6 fest, daß sich bei einer Bremsung des vorausfahrenden Fahrzeugs 1 die Relativgeschwindigkeit auch nach Ablauf einer gewissen Reaktionszeit immer noch erhöht oder über einem vorgegebenen Grenzwert liegt, gibt der Mikrocontroller 6 ein Warnsignal 7 an eine visuelle oder akustische Anzeigeeinrichtung 8 aus, die den Fahrer auf das Bestehen oder auch die Bedrohlichkeit der Situation aufmerksam macht.

Der Mikrocontroller 6 ist ferner über eine bidirektionale Datenleitung 9 mit einem Bussystem 10 des Kraftfahrzeugs verbunden. Das Bussystem 10 steht mit einem in der Fig. 2 nicht dargestellten Bremssteuergerät des Kraftfahrzeugs in Verbindung, und ferner wird dem Mikrocontroller 6 über die bidirektionale Datenleitung 10 Fahrzustandsinformation wie beispielsweise die aktuelle Geschwindigkeit und die aktuelle Beschleunigung oder Verzögerung des Fahrzeugs sowie gegebenenfalls Informationen über die Beschaffenheit des Fahrbahnzustand (trockene/nasse/schneeglatte Fahrbahn) mitgeteilt.

Gemäß einem von dem Mikrocontroller 6 auf der Basis der ermittelten Relativgeschwindigkeiten sowie der Fahrzustandsinformation berechneten Gefahrengrad der Situation gibt der Mikrocontroller 6 über die bidirektionale Datenleitung 9 ein Signal ab, das eine selbsttätige Bremsung einleitet und dabei dem Bremssteuergerät auch die Stärke der erforderlichen Bremsung mitteilt.

Die Anzeige des Warnsignals 7 durch die Anzeigeeinrichtung 8 und die selbsttätige Bremsung über die bidirektionale Datenleitung 9 und das Bussystem 10 können alternativ oder gemeinsam erfolgen, und es kann auch vorgesehen sein, daß ein selbsttätiger Bremsvorgang nur bei einem signifikant hohen Gefahrengrad durchgeführt wird, bei dem die Anzeige eines Warnsignals nicht mehr erfolgsversprechend erscheint.

Der Mikrocontroller 6 weist ferner einen nicht dargestellten internen Pulsgenerator auf, an dessen Ausgang ein elektrisches Pulssignal 11 mit der Referenzfrequenz zur Verfügung steht. Das elektrische Pulssignal 11 wird einer LED-Ansteuerschaltung 12 zugeleitet, die den von den LEDs 2 der LED-Arrays benötigten gepulsten Betriebsstrom erzeugt. Die Referenzfrequenz liegt im kHz bis MHz-Bereich.

Gemäß der zweiten Ausführungsform der vorliegenden Erfindung kann dem die LEDs ansteuernden elektrischen Pulssignal 11 ein Nutzsignal überlagert sein. In diesem Fall wird dem Mikrocontroller 6 über die bidirektionale Datenleitung 9 neben den bereits genannten Daten beispielsweise auch eine Information über die Stärke einer gerade erfolgenden Bremsung mitgeteilt. Diese Information wird der LED-Ansteuerschaltung 12 entweder durch eine geeignete Amplitudenmodulation des elektrischen Pulssignals 11 fester Frequenz (Referenzfrequenz) oder durch Erzeugung eines zusätzlichen, amplituden- oder frequenzmodulierten elektrischen Nutzsignals, welches dem Pulssignal 11 überlagert ist und eine andere Frequenz als dieses aufweist, verfügbar gemacht.

Bei einer Signaldetektion kann der Mikrocontroller 6 eines nachfolgenden Fahrzeugs aus dem Empfangssignal 5 die Nutzinformation zurückgewinnen und auf der Basis der Nutzinformation sowie der gegebenenfalls gemäß der ersten Ausführungsform ermittelten Relativgeschwindigkeitswerte sowie der Fahrzustandsinformationen weitere Maßnahmen einleiten.

Die aufmodulierte Nutzinformation muß keine Bremsinformation sein sondern kann vielfältige Arten von Information wie beispielsweise auch Anfahrinformation, Beschleunigungsinformation oder dergleichen umfassen. Ferner ist es auch möglich, zur Übertragung von Nutzinformation mehrere überlagerte Nutzsignale vorzusehen.

## Patentansprüche

1. Verfahren zur Informationsübermittlung von einem stationären oder beweglichen Objekt (1) an ein Fahrzeug, das die Schritte aufweist:
- Aussenden eines einer zu übermittelnden Information entsprechend pulsierenden Lichtsignals (13) mittels mindestens einem lichtemittierenden Halbleiterbauelement (2), das die Signalleuchte einer Verkehrsampel oder eine Fahrzeugleuchte ist;
- Empfangen des pulsierenden Lichtsignals (13) mittels einer im oder am Fahrzeug (3) angeordneten optoelektronischen Empfangseinrichtung (4), die das pulsierende Lichtsignal (13) in ein elektrisches Empfangssignal (5) umwandelt;
- Auswerten des elektrischen Empfangssignals (5) durch eine dem Fahrzeug zugeordnete Auswerteschaltung (6);
- Anzeigen der dem elektrischen Empfangssignal entsprechenden Information im Fahrzeug und/oder Steuern von zumindest einer den Betriebszustand des Kraftfahrzeuges beeinflussenden Fahrzeug-Komponente auf der Basis der dem Empfangssignal entsprechenden Information und
- mit dem Aussenden der zu übermittelnden Information gleichzeitges Aussenden eines visuellen Signales unmittelbar an den Fahrer des Fahrzeuges mittels des lichtemittierenden Halbleiterbauelements alleine oder zusammen mit weiteren lichtemittierenden Elementen.

2. Verfahren nach Anspruch 1, bei dem
- das ausgesendete Lichtsignal (13) ein Pulssignal mit vorbestimmter konstanter Frequenz ist, und
- die Auswerteschaltung (6) aus einer Frequenzabweichung des elektrischen Empfangssignals (5) von der konstanten Frequenz die Relativgeschwindigkeit zwischen dem Objekt (1) und dem Fahrzeug (3) ermittelt.

3. Verfahren nach einem der Ansprüche 1 oder 2, bei dem,
- dem ausgesendeten pulsierenden Lichtsignal (13) ein Nutzinformation tragendes Nutzsignal aufmoduliert ist,
- die Auswerteschaltung (6) das in dem elektrischen Empfangsignal (5) enthaltene umgewandelte Nutzsignal auswertet und
- die bei der Auswertung (6) erhaltene Information die Nutzinformation umfaßt.

4. Verfahren nach einem der vorhergehenden Ansprüche, bei dem das Nutzsignal ein amplitudenmoduliertes oder ein frequenzmoduliertes Signal ist.

5. Verfahren nach einem der vorhergehenden Ansprüche, bei dem die erhaltene Information dem Fahrer des Fahrzeuges (3) durch ein optisches und/oder akustisches Hinweissignal (7) angezeigt wird.

6. Verfahren nach einem der vorhergehenden Ansprüche, bei dem eine Bremsanlage und/oder eine die Motorbeschleunigung regelnde Komponente des Fahrzeugs (3) auf der Basis der bei der Auswertung erhaltenen Information gesteuert wird.

7. Sende- und Empfangsanordnung zur Informationsübertragung von einem stationären oder beweglichen Objekt (1) an ein Fahrzeug
- mit mindestens einem zur Erzeugung eines visuellen Signals für den Fahrer des Fahrzeugs vorgesehenen lichtemittierendem Halbleiterbauelement (2), das ein pulsierendes Lichtsignal (13) aussendet, und das die Signalleuchte einer Verkehrsampel oder eine Fahrzeugleuchte ist;
- mit einer an dem Fahrzeug (3) angebrachten optoelektronischen Empfangseinrichtung (4), die das ausgesendete pulsierende Lichtsignal (13) empfängt und in ein elektrisches Empfangssignal (5) umwandelt;
- mit einer dem Fahrzeug (3) zugeordneten Auswerteschaltung (6), die das elektrische Empfangssignal (5) auswertet; und
- mit einer Anzeigeeinrichtung (8), die die bei der Auswertung erhaltene Information anzeigt und/oder einer Steuereinrichtung, die zumindest eine Fahrzeug-Komponente auf der Basis des bei der Auswertung erhaltenen Empfangssignals steuert.

8. Sende- und Empfangsanordnung nach Anspruch 7, bei der das Objekt (1) ein dem Fahrzeug (3) vorausfahrendes weiteres Fahrzeug ist.

9. Sende- und Empfangsanordnung nach Anspruch 8, bei der die Leuchtdiode (2) im Rücklicht oder im Bremslicht eines vorausfahrenden weiteren Fahrzeugs (1) angeordnet ist.

10. Sende- und Empfangsanordnung nach Anspruch 7, bei der die Verkehrsampel oder die Warnleuchte eine Vielzahl von lichtemittierenden Halbleiterbauelementen aufweist, die das pulsierende Lichtsignal aussenden, das gleichzeitig sowohl zur Anzeige der Signalzustände der Ampel bzw. der Warnleuchte für den Fahrer dient als auch die zu übertragende Information an die Empfangseinrichtung des Fahrzeugs enthält.

11. Sende- und Empfangsanordnung nach einem der Ansprüche 7 bis 10, bei der zur Aussendung des pulsierenden Lichtsignals (13) ein LED-Array oder eine Zeile aus mehreren LEDs (2) vorgesehen ist.

## Claims

1. Method for transmitting information from a stationary or movable object (1) to a vehicle, which has the following steps:
- emitting a light signal (13), pulsating in accordance with an information to be transmitted, by means of at least one light-emitting semiconductor component (2) which is the signal light of traffic lights or a vehicle lamp;
- receiving the pulsating light signal (13) by means of an optoelectronic receiving device (4) which is arranged in or on the vehicle (3) and converts the pulsating light signal (13) into an electric received signal (5);
- evaluating the electric received signal (5) by means of an evaluation circuit (6) assigned to the vehicle;
- displaying the information corresponding to the electric received signal in the vehicle and/or controlling at least one vehicle component, which influences the operating state of the motor vehicle, on the basis of the information corresponding to the received signal, and
- emitting a visual signal, simultaneously with the emission of the information to be transmitted, directly to the driver of the vehicle by means of the light-emitting semiconductor component alone or together with further light-emitting elements.

2. Method according to Claim 1, in which
- the emitted light signal (13) is a pulsed signal with predetermined constant frequency, and
- the evaluation circuit (6) determines the relative speed between the object (1) and the vehicle (3) from a frequency deviation in the electric received signal (5) from the constant frequency.

3. Method according to one of Claims 1 and 2, in which
- a useful signal bearing useful information is modulated onto the emitted pulsating light signal (13),
- the evaluation circuit (6) evaluates the converted useful signal included in the electric received signal (5), and
- the information obtained in the evaluation (6) comprises the useful information.

4. Method according to one of the preceding claims, in which the useful signal is an amplitude-modulated or a frequency-modulated signal.

5. Method according to one of the preceding claims, in which the obtained information is displayed to the driver of the vehicle (3) by means of an optical and/or acoustic advisory signal (7).

6. Method according to one of the preceding claims, in which a brake system and/or a component of the vehicle (3) which controls the engine acceleration is controlled on the basis of the information obtained in the evaluation.

7. Sending and receiving arrangement for transmitting information from a stationary or movable object (1) to a vehicle
- having at least one light-emitting semiconductor component (2) which is provided for generating a visual signal for the driver of the vehicle, which emits a pulsating light signal (13) and which is the signal light of traffic lights or a vehicle lamp;
- having an optoelectronic receiving device (4) which is fitted on the vehicle (3), and receives the emitted pulsating light signal (13) and is converted into an electric received signal (5);
- having an evaluation circuit (6) which is assigned to the vehicle (3) and evaluates the electric received signal (5); and
- having a display device (8) which displays the information obtained in the evaluation, and/or a control device which controls at least one vehicle component on the basis of the received signal obtained in the evaluation.

8. Sending and receiving arrangement according to Claim 7, in which the object (1) is a further vehicle driving in front of the vehicle (3).

9. Sending and receiving arrangement according to Claim 8, in which the light-emitting diode (2) is arranged in the rear light or in the brake light of a further vehicle (1) driving in front.

10. Sending and receiving arrangement according to Claim 7, in which the traffic lights or the warning lamp comprise a multiplicity of light-emitting semiconductor components which emit the pulsating light signal which simultaneously both serves to display signalling states of the traffic lights or of the warning lamp to the driver, and also includes the information to be transmitted to the receiving device of the vehicle.

11. Sending and receiving arrangement according to one of Claims 7 to 10, in which an LED array or a row of a plurality of LEDs (2) is provided for emitting the pulsating light signal (13).

## Revendications

1. Procédé de transmission d'une information d'un objet (1) fixe ou mobile à un véhicule qui comprend les étapes suivantes :
- émission d'un signal lumineux impulsionnel (13) correspondant à l'information à transmettre au moyen d'au moins un composant semiconducteur (2) électroluminescent qui est la lampe de signalisation d'un feu de trafic ou un feu d'un véhicule ;
- réception du signal lumineux impulsionnel (13) au moyen d'un dispositif de réception optoélectronique (4) disposé dans ou sur le véhicule (3) qui convertit le signal lumineux impulsionnel (13) en un signal reçu électrique (5) ;
- évaluation du signal reçu électrique (5) par un circuit d'évaluation (6) affecté au véhicule ;
- affichage de l'information correspondant au signal reçu électrique dans le véhicule et/ou commande d'au moins un composant du véhicule qui influence l'état de fonctionnement du véhicule en se basant sur l'information correspondant au signal reçu et
- émission simultanée à l'émission de l'information à transmettre d'un signal visuel directement au conducteur du véhicule au moyen du composant semiconducteur électroluminescent seulement ou en combinaison avec d'autres éléments émetteurs de lumière.

2. Procédé selon la revendication 1, avec lequel
- le signal lumineux (13) émis est un signal impulsionnel à fréquence constante prédéfinie, et
- le circuit d'évaluation (6) détermine la vitesse relative entre l'objet (1) et le véhicule (3) à partir d'un écart de fréquence entre le signal reçu électrique (5) et la fréquence constante.

3. Procédé selon l'une des revendications 1 ou 2, avec lequel
- un signal utile transportant une information utile est superposé par modulation au signal lumineux impulsionnel (13) émis ,
- le circuit d'évaluation (6) évalue le signal utile converti contenu dans le signal reçu électrique (5) et
- l'information obtenue lors de l'évaluation (6) comprend l'information utile.

4. Procédé selon l'une des revendications précédentes, avec lequel le signal utile est un signal modulé en amplitude ou modulé en fréquence.

5. Procédé selon l'une des revendications précédentes, avec lequel l'information reçue est signalée au conducteur du véhicule (3) par un signal indicateur (7) visuel et/ou sonore.

6. Procédé selon l'une des revendications précédentes, avec lequel un équipement de freinage et/ou un composant du véhicule (3) qui régule l'accélération du moteur est commandé en se basant sur l'information obtenue lors de l'évaluation.

7. Arrangement d'émission et de réception destiné à la transmission d'une information d'un objet (1) fixe ou mobile à un véhicule
- comprenant au moins un composant semiconducteur électroluminescent (2) prévu pour produire un signal visuel au conducteur du véhicule, qui émet un signal lumineux impulsionnel (13) et qui est la lampe de signalisation d'un feu de trafic ou un feu d'un véhicule ;
- comprenant un dispositif de réception optoélectronique (4) disposé sur le véhicule (3) qui reçoit le signal lumineux impulsionnel (13) et le convertit en un signal reçu électrique (5) ;
- comprenant un circuit d'évaluation (6) affecté au véhicule (3) qui évalue le signal reçu électrique (5) ; et
- comprenant un dispositif d'affichage (8) qui affiche l'information obtenue lors de l'évaluation et/ou un dispositif de commande qui commande au moins un composant du véhicule en se basant sur le signal reçu obtenu lors de l'évaluation.

8. Arrangement d'émission et de réception selon la revendication 7, avec lequel l'objet (1) est un autre véhicule qui précède le véhicule (3).

9. Arrangement d'émission et de réception selon la revendication 8, avec lequel la diode électroluminescente (2) est disposée dans le feu arrière ou dans le feu stop d'un autre véhicule précédant (1).

10. Arrangement d'émission et de réception selon la revendication 7, avec lequel le feu de trafic ou le feu d'avertissement comprend une pluralité de composants semiconducteurs électroluminescents qui émettent le signal lumineux impulsionnel qui sert aussi bien à l'affichage des états de signalisation du feu de signalisation ou du feu d'avertissement pour le conducteur et qui en même temps contient l'information à transmettre au dispositif de réception du véhicule.

11. Arrangement d'émission et de réception selon l'une des revendications 7 à 10, avec lequel un réseau de LED ou une ligne de plusieurs LED (2) est prévu pour l'émission du signal lumineux impulsionnel (13).
